# EUROPEAN PATENT APPLICATION

(11) **EP 4 793 478 A2**
(43) Date of publication of application: **19.08.2026**
(21) Application number: 26157782.9
(22) Date of filing: 11.02.2026
(51) Int. Cl.: F02C 6/20, F02C 7/04, F02K 3/02

(54) **COWL ASSEMBLY FOR A GAS TURBINE ENGINE**

(30) Priority: 12.02.2025 US 202563757377 P; 22.01.2026 US 202619456019
(71) Applicant: General Electric Company, Cincinnati, Ohio 45215 (US); GE Aerospace Poland Sp. z o.o., 02-256 Warsaw (PL)
(72) Inventor: KAMI SKI, Robert, 02-256 Warsaw (PL); DAGGETT, Nicholas, Evendale, 45215 (US); GLYNN, Christopher Charles, Evendale, 45215 (US); NIERGARTH, Daniel Alan, Evendale, 45241 (US); ZATORSKI, Darek Tomasz, Evendale, 45215 (US)
(74) Representative: Openshaw & Co.

(57) **Abstract**

A gas turbine engine includes a turbomachine having a compressor section, a combustion section, and a turbine section in serial flow order. A fan section defines an axial centerline and a rotor and includes a fan and a spinner assembly drivingly coupled to the turbomachine. The rotor supports a plurality of fan blades being rotatable about the axial centerline in a circumferential direction. A cowl assembly is positioned aft of at least a portion of the spinner assembly. The cowl assembly and the spinner assembly define at least part of an airflow surface rotatable with the fan and exposed to a fan airflow provided to and through the fan during operation of the gas turbine engine. The cowl assembly is at least partly cantileverly supported by the rotor.

## Description

### TECHNICAL FIELD

The present disclosure generally relates to a gas turbine engine and, more particularly, to a cowl assembly.

### BACKGROUND

A gas turbine engine generally includes a fan and a turbomachine arranged in flow communication with one another. Additionally, the turbomachine of the gas turbine engine includes, in serial flow order, a compressor section, a combustion section, a turbine section, and an exhaust section. In operation, air is provided from the fan to an inlet of the compressor section where one or more axial compressors progressively compress the air until it reaches the combustion section to provide combustion gases. The combustion gases are routed from the combustion section to the turbine section. The flow of combustion gasses through the turbine section drives the turbine section and is then routed through the exhaust section, e.g., to the atmosphere.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a gas turbine engine according to the present disclosure.
FIG. 2 is a schematic cross-sectional view of a portion of a fan section of the gas turbine engine depicted in FIG. 1 according to the present disclosure.
FIG. 3 is a schematic isometric view of a portion of the fan section of the gas turbine engine depicted in FIG. 2 according to the present disclosure.

Corresponding reference characters indicate corresponding parts throughout the several views. The exemplifications set out herein illustrate exemplary embodiments of the disclosure, and such exemplifications are not to be construed as limiting the scope of the disclosure in any manner.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The following description is provided to enable those skilled in the art to make and use the described embodiments contemplated for carrying out the disclosure. Various modifications, equivalents, variations, and alternatives, however, will remain readily apparent to those skilled in the art. Any and all such modifications, variations, equivalents, and alternatives are intended to fall within the scope of the present disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

For purposes of the description hereinafter, the terms "upper", "lower", "right", "left", "vertical", "horizontal", "top", "bottom", "lateral", "longitudinal", and derivatives thereof shall relate to the disclosure as it is oriented in the drawing figures. However, it is to be understood that the disclosure may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The singular forms "a", "an", and "the" include plural references unless the context clearly dictates otherwise.

The terms "coupled," "fixed," "attached to," and the like refer to both direct coupling, fixing, or attaching, as well as indirect coupling, fixing, or attaching through one or more intermediate components or features, unless otherwise specified herein.

The term "proximate" refers to being closer to one end than an opposite end. For example, when used in conjunction with first and second ends; high pressure and low pressure sides; or the like, the phrase "proximate the first end," or "proximate the high pressure side," refers to a location closer to the first end than the second end, or closer to the high pressure side than the low pressure side, respectively.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

A "third stream" as used herein means a non-primary air stream capable of increasing fluid energy to produce a minority of total propulsion system thrust. The third stream may generally receive inlet air (air from a ducted passage downstream of a primary fan) instead of freestream air (as the primary fan would). A pressure ratio of the third stream may be higher than that of the primary propulsion stream (e.g., a bypass or propeller driven propulsion stream). The thrust may be produced through a dedicated nozzle or through mixing of an airflow through the third stream with a primary propulsion stream or a core air stream, e.g., into a common nozzle.

In certain exemplary embodiments an operating temperature of the airflow through the third stream may be less than a maximum compressor discharge temperature for the engine, and more specifically may be less than 350 degrees Fahrenheit (such as less than 300 degrees Fahrenheit, such as less than 250 degrees Fahrenheit, such as less than 200 degrees Fahrenheit, and at least as great as an ambient temperature). In certain exemplary embodiments these operating temperatures may facilitate heat transfer to or from the airflow through the third stream and a separate fluid stream. Further, in certain exemplary embodiments, the airflow through the third stream may contribute less than 50% of the total engine thrust (and at least, e.g., 2% of the total engine thrust) at a takeoff condition, or more particularly while operating at a rated takeoff power at sea level, static flight speed, 86 degree Fahrenheit ambient temperature operating conditions.

The term "cruise operating mode" (or "cruise condition") refers to the condition of a gas turbine engine utilized to power an aircraft while operating at a cruise speed when the aircraft levels after climbing to a specified altitude associated with cruise flight. A gas turbine engine may operate at a cruise speed that is from 50% to 90% of a rated speed, such as from 70% to 80% of the rated speed. As used herein, the term "cruise flight" refers to a phase of flight in which an aircraft levels in altitude after a climb phase and prior to descending to an approach phase. In most flight envelopes, the cruise operating mode is exemplified by the operating mode of the gas turbine engine at a midpoint of the particular flight envelope based on a total fuel burn for the flight envelope (i.e., when the gas turbine engine has burned 50% of the total fuel burn for that gas turbine engine during the flight operation).

In various examples, cruise flight may take place at a cruise altitude up to approximately 65,000 feet (ft.). In certain examples, cruise altitude is between approximately 28,000 ft. and approximately 45,000 ft. In yet other examples, cruise altitude is expressed in flight levels (FL) based on a standard air pressure at sea level, in which cruise flight is between FL280 and FL650. In another example, cruise flight is between FL280 and FL450. In still certain examples, cruise altitude is defined based at least on a barometric pressure, in which cruise altitude is between approximately 4.85 psia and approximately 0.82 psia based on a sea-level pressure of approximately 14.70 psia and sea-level temperature at approximately 59 degrees Fahrenheit. In another example, cruise altitude is between approximately 4.85 psia and approximately 2.14 psia. It should be appreciated that, in certain examples, the ranges of cruise altitude defined by pressure may be adjusted based on a different reference sea-level pressure and/or sea-level temperature.

Furthermore in certain exemplary embodiments, aspects of the airflow through the third stream (e.g., airstream, mixing, or exhaust properties), and thereby the aforementioned exemplary percent contribution to total thrust, may passively adjust during engine operation or be modified purposefully through use of engine control features (such as fuel flow, electric machine power, variable stators, variable inlet guide vanes, valves, variable exhaust geometry, or fluidic features) to adjust or optimize overall system performance across a broad range of potential operating conditions.

The present disclosure is generally related to a cowl assembly in a fan section of a gas turbine engine that rotates with a fan of the fan section. The cowl assembly defines, at least in part, an airflow surface through the fan between a spinner assembly located at a forward end of the gas turbine engine and an inlet to a turbomachine of the gas turbine engine. In exemplary embodiments, at least a portion of the cowl assembly is cantileverly supported within the fan section to enable a slight deflection of the cowl assembly in the event of an object being ingested through the fan section in the fan section airflow. By forming the cowl assembly as a cantilevered structure in accordance with the present disclosure, an impact by an object entering the fan section, in most cases, is not transferred to the hub or rotor of the gas turbine engine because the cantilevered cowl assembly will deflect and absorb such impact. Additionally, embodiments of the present disclosure reduce the weight of the gas turbine engine by eliminating structure at the freestanding or unsupported portions of the cantilevered cowl assembly.

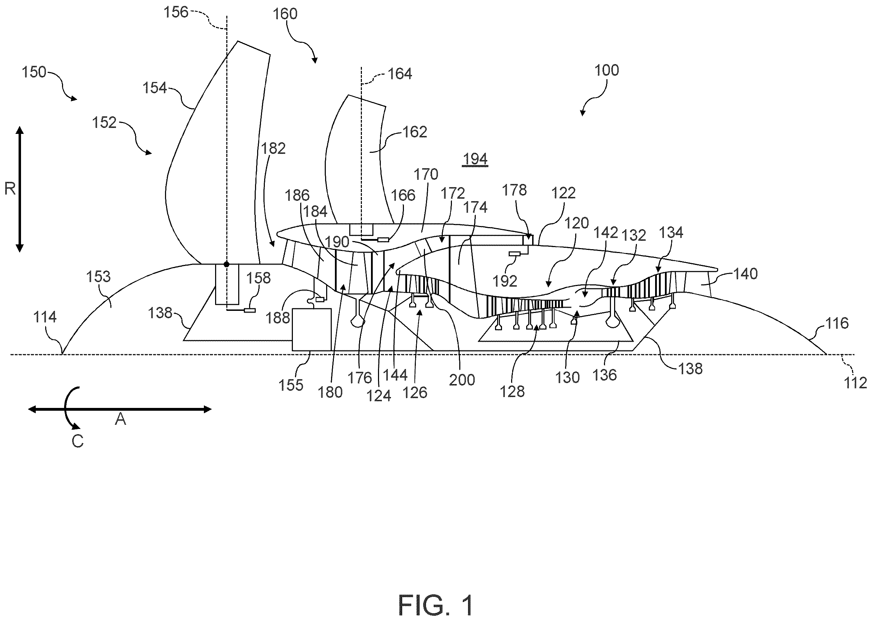

Referring now to FIG. 1, a schematic cross-sectional view of a gas turbine engine 100 is provided according to an example embodiment of the present disclosure. Particularly, FIG. 1 provides a turbofan engine having a rotor assembly with a single stage of unducted rotor blades. In such a manner, the rotor assembly may be referred to herein as an "unducted fan," or the entire engine 100 may be referred to as an "unducted turbofan engine." In addition, the engine 100 of FIG. 1 includes a third stream extending from the compressor section to a rotor assembly flowpath over the turbomachine, as will be explained in more detail below.

For reference, the engine 100 defines an axial direction A, a radial direction R, and a circumferential direction C. Moreover, the engine 100 defines an axial centerline or longitudinal axis 112 that extends along the axial direction A. In general, the axial direction A extends parallel to the longitudinal axis 112, the radial direction R extends outward from and inward to the longitudinal axis 112 in a direction orthogonal to the axial direction A, and the circumferential direction extends three hundred sixty degrees (360°) around the longitudinal axis 112. The engine 100 extends between a forward end 114 and an aft end 116, e.g., along the axial direction A.

The engine 100 includes a turbomachine 120 and a rotor assembly, also referred to a fan section 150, positioned upstream thereof. Generally, the turbomachine 120 includes, in serial flow order, a compressor section, a combustion section, a turbine section, and an exhaust section. Particularly, as shown in FIG. 1, the turbomachine 120 includes a core cowl 122 that defines an annular core inlet 124. The core cowl 122 further encloses at least in part a low pressure system and a high pressure system. For example, the core cowl 122 depicted encloses and supports at least in part a booster or low pressure ("LP") compressor 126 for pressurizing the air that enters the turbomachine 120 through core inlet 124. A high pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 130 downstream to a high pressure turbine 132. The high pressure turbine 128 drives the high pressure compressor 128 through a high pressure shaft 136. In this regard, the high pressure turbine 128 is drivingly coupled with the high pressure compressor 128. The high energy combustion products then flow to a low pressure turbine 134. The low pressure turbine 134 drives the low pressure compressor 126 and components of the fan section 150 through a low pressure shaft 138. In this regard, the low pressure turbine 134 is drivingly coupled with the low pressure compressor 126 and components of the fan section 150. The LP shaft 138 is coaxial with the HP shaft 136 in this example embodiment. After driving each of the turbines 132, 134, the combustion products exit the turbomachine 120 through a turbomachine exhaust nozzle 140.

Accordingly, the turbomachine 120 defines a working gas flowpath or core duct 142 that extends between the core inlet 124 and the turbomachine exhaust nozzle 140. The core duct 142 is an annular duct positioned generally inward of the core cowl 122 along the radial direction R. The core duct 142 (e.g., the working gas flowpath through the turbomachine 120) may be referred to as a second stream.

The fan section 150 includes a fan 152, which is the primary fan in this example embodiment. For the depicted embodiment of FIG. 1, the fan 152 is an open rotor or unducted fan 152. In such a manner, the engine 100 may be referred to as an open rotor engine.

As depicted, the fan 152 includes an array of fan blades 154 (only one shown in FIG. 1). The fan blades 154 are rotatable, e.g., about the longitudinal axis 112. As noted above, the fan 152 is drivingly coupled with the low pressure turbine 134 via the LP shaft 138. For the embodiments shown in FIG. 1, the fan 152 is coupled with the LP shaft 138 via a speed reduction gearbox 155, e.g., in an indirect-drive or geared-drive configuration. The forward end 114 may also include a spinner assembly 153 that is rotatable with the fan blades 154 about the longitudinal axis 112. The spinner 153 may also be referred to as the hub or nose cone.

Moreover, the array of fan blades 154 can be arranged in equal spacing around the longitudinal axis 112. Each fan blade 154 has a root and a tip and a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore may be used to change a pitch of the fan blades 154 about their respective central blades' axes 156.

The fan section 150 further includes a fan guide vane array 160 that includes fan guide vanes 162 (only one shown in FIG. 1) disposed around the longitudinal axis 112. For this embodiment, the fan guide vanes 162 are not rotatable about the longitudinal axis 112. Each fan guide vane 162 has a root and a tip and a span defined therebetween. The fan guide vanes 162 may be unshrouded as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 166 are provided to facilitate such rotation and therefore may be used to change a pitch of the fan guide vane 162 about its respective central blade axis 164. However, in other embodiments, each fan guide vane 162 may be fixed or unable to be pitched about its central blade axis 164. The fan guide vanes 162 are mounted to the fan cowl 170.

As shown in FIG. 1, in addition to the fan 152, which is unducted, a ducted fan 184 is included aft of the fan 152, such that the engine 100 includes both a ducted and an unducted fan which both serve to generate thrust through the movement of air without passage through at least a portion of the turbomachine 120 (e.g., without passage through the HP compressor 128 and combustion section for the embodiment depicted). The ducted fan 184 is rotatable about the same axis (e.g., the longitudinal axis 112) as the fan blade 154. The ducted fan 184 is, for the embodiment depicted, driven by the low pressure turbine 134 (e.g. coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1) arranged in a single stage, such that the ducted fan 184 may be referred to as a single stage fan. The fan blades of the ducted fan 184 can be arranged in equal spacing around the longitudinal axis 112. Each blade of the ducted fan 184 has a root and a tip and a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flowpath, or simply a fan duct 172. According to this embodiment, the fan flowpath or fan duct 172 may be understood as forming at least a portion of the third stream of the engine 100.

Incoming air may enter through the fan duct 172 through a fan duct inlet 176 and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially-extending, circumferentially-spaced stationary struts 174 (only one shown in FIG. 1). The stationary struts 174 may each be aerodynamically contoured to direct air flowing thereby. Other struts in addition to the stationary struts 174 may be used to connect and support the fan cowl 170 and/or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The engine 100 also defines or includes an inlet duct 180. The inlet duct 180 extends between the engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 144 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the engine 100 includes one or more features to increase an efficiency of a third stream thrust, Fn_{3S} (e.g., a thrust generated by an airflow through the fan duct 172 exiting through the fan exhaust nozzle 178, generated at least in part by the ducted fan 184). In particular, the engine 100 further includes an array of inlet guide vanes 186 positioned in the inlet duct 180 upstream of the ducted fan 184 and downstream of the engine inlet 182. The array of inlet guide vanes 186 are arranged around the longitudinal axis 112. For this embodiment, the inlet guide vanes 186 are not rotatable about the longitudinal axis 112. Each inlet guide vanes 186 defines a central blade axis (not labeled for clarity), and is rotatable about its respective central blade axis, e.g., in unison with one another. In such a manner, the inlet guide vanes 186 may be considered a variable geometry component. One or more actuators 188 are provided to facilitate such rotation and therefore may be used to change a pitch of the inlet guide vanes 186 about their respective central blade axes. However, in other embodiments, each inlet guide vanes 186 may be fixed or unable to be pitched about its central blade axis.

Further, located downstream of the ducted fan 184 and upstream of the fan duct inlet 176, the engine 100 includes an array of outlet guide vanes 190. As with the array of inlet guide vanes 186, the array of outlet guide vanes 190 are not rotatable about the longitudinal axis 112. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the engine 100 includes one or more actuators 192 for modulating the variable geometry exhaust nozzle. For example, the variable geometry exhaust nozzle may be configured to vary a total cross-sectional area (e.g., an area of the nozzle in a plane perpendicular to the longitudinal axis 112) to modulate an amount of thrust generated based on one or more engine operating conditions (e.g., temperature, pressure, mass flowrate, etc. of an airflow through the fan duct 172). A fixed geometry exhaust nozzle may also be adopted.

The combination of the array of inlet guide vanes 186 located upstream of the ducted fan 184, the array of outlet guide vanes 190 located downstream of the ducted fan 184, and the fan exhaust nozzle 178 may result in a more efficient generation of third stream thrust, Fn_{3S}, during one or more engine operating conditions. Further, by introducing a variability in the geometry of the inlet guide vanes 186 and the fan exhaust nozzle 178, the engine 100 may be capable of generating more efficient third stream thrust, Fn_{3S}, across a relatively wide array of engine operating conditions, including takeoff and climb (where a maximum total engine thrust Fn_{Total}, is generally needed) as well as cruise (where a lesser amount of total engine thrust, Fn_{Total}, is generally needed).

Moreover, referring still to FIG. 1, in exemplary embodiments, air passing through the fan duct 172 may be relatively cooler (e.g., lower temperature) than one or more fluids utilized in the turbomachine 120. In this way, one or more heat exchangers 200 may be positioned in thermal communication with the fan duct 172. For example, one or more heat exchangers 200 may be disposed within the fan duct 172 and utilized to cool one or more fluids from the core engine with the air passing through the fan duct 172, as a resource for removing heat from a fluid, e.g., compressor bleed air, oil or fuel.

Although not depicted, the heat exchanger 200 may be an annular heat exchanger extending substantially 360 degrees in the fan duct 172 (e.g., at least 300 degrees, such as at least 330 degrees). In such a manner, the heat exchanger 200 may effectively utilize the air passing through the fan duct 172 to cool one or more systems of the engine 100 (e.g., lubrication oil systems, compressor bleed air, electrical components, etc.). The heat exchanger 200 uses the air passing through duct 172 as a heat sink and correspondingly increases the temperature of the air downstream of the heat exchanger 200 and exiting the fan exhaust nozzle 178.

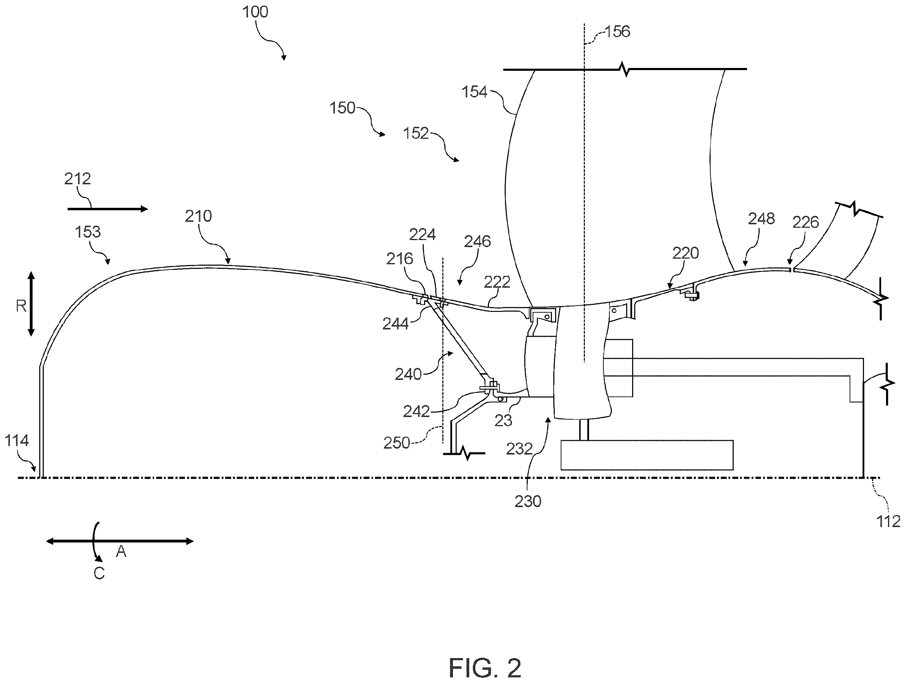

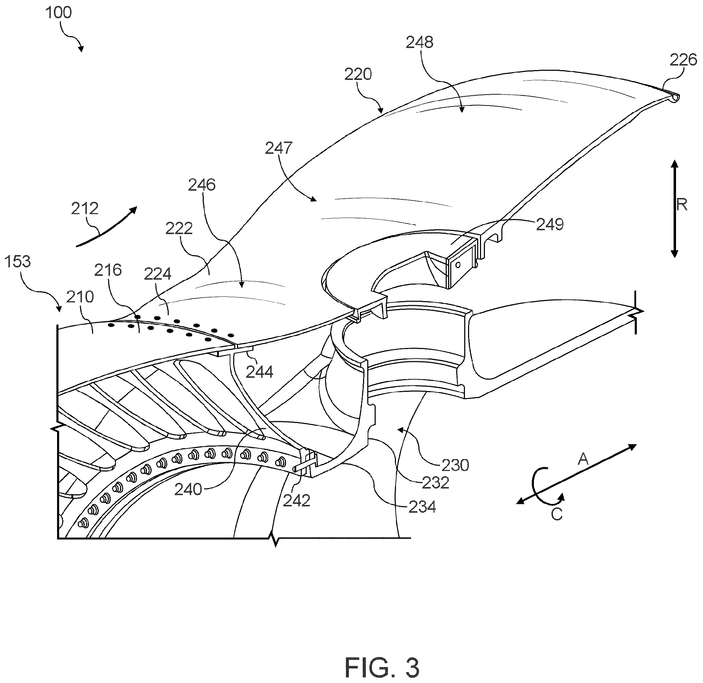

FIG. 2 depicts a schematic cross-sectional view of a portion of the fan section 150 of the gas turbine engine 100, and FIG. 3 depicts a schematic isometric view of at least a portion of the fan section 150 of the gas turbine engine 100 depicted in FIG. 2. The fan section 150 includes an airflow surface 210 rotatable with the fan 152 and exposed to an inlet airflow 212 (e.g., a fan airflow) provided to and through the fan 152 during operation of the gas turbine engine 100. The airflow surface 210 is defined at least in part by the spinner assembly 153 located at the forward end 114 of the gas turbine engine 100 and a cowl assembly 220 that extends aft from the spinner assembly 153 through at least a portion of the fan section 150 to a location aft of the fan blades 154. The cowl assembly 220 may be an annular configuration and is rotatable with the spinner assembly 153 about the longitudinal axis 112. The spinner assembly 153 may include a spinner shell 214 that forms the nose cone of the gas turbine engine 100 and extends aft toward the fan blades 154 (omitted from FIG, 3 for ease of description and illustration). The cowl assembly 220 may include one or more cowl panels 222 that interface with or abut an aft end 216 of the spinner shell 214 to maintain an aerodynamic airflow surface 210 through the fan 152. The one or more cowl panels 222 may be of any circumferential span. In the illustrated embodiment, the cowl assembly 220 includes a forward end 224 interfacing with and/or abutting the aft end 216 of the spinner shell 214 and an aft end 226 located aft of the fan blades 154.

A portion of a rotor 230 is depicted supporting the fan blades 154 (depicted in FIG. 2) that extend radially outward. In the illustrated embodiment, the rotor 230 comprises a rotor main body 232 having a forward rotor arm 234 that extends forward from the rotor main body 232. The forward rotor arm 234 provides a mounting surface for coupling a support 240 to the rotor 230. In exemplary embodiments, the support 240 includes an inboard end 242 and an outboard end 244 located distally from the inboard end 242. In the embodiment illustrated in FIGS. 2 and 3, the support 240 extends at least partially radially outward from the inboard end 242 and at least partially forward from the inboard end 242 to define the outboard end 244. The inboard end 242 is coupled to the forward rotor arm 234. In exemplary embodiments, the aft end 216 of the spinner shell 214 is coupled to the outboard end 244 of the support 240, and the forward end 224 of the cowl assembly 220 is coupled to the outboard end of the support. In exemplary embodiments, the cowl assembly 220 is cantileverly supported by at least a portion of the outboard end 244 of the support 240 such that areas of the cowl assembly 220 aft of the cantilever support and connection to the support 240 are freestanding or unsupported. Thus, in other words, the cowl assembly 220 is cantileverly supported by at least a portion of the rotor 230 toward the forward end 224 of the cowl assembly 220. Thus, during a cruise operating mode of the aircraft 100 (FIG. 1), the cowl assembly 220 is cantileverly supported at or near its forward end 224 and at least the aft end 226 of the cowl assembly 220 is freestanding or unsupported. Thus, in exemplary embodiments, during a cruise operating mode of the aircraft 100 (FIG. 1), at least 50% of the cowl assembly 220 located aft of the forward end 224 is freestanding or unsupported. In exemplary embodiments, during a cruise operating mode of the aircraft 100 (FIG. 1), at least a portion of the cowl assembly 220 located forward of the fan blades 154 is freestanding or unsupported.

In exemplary embodiments, the one or more cowl panels 222 may include a forward portion 246 at or near the forward end 224, a medial portion 247 located aft of the forward portion 246, and an aft portion 248 located aft of the medial portion 247 and defining the aft end 226. The medial portion 247 may extend through the fan 152 adjacent the fan blades 154. In other words, the medial portion 247 may circumscribe at least a portion of one or more rotor disks 249 supporting one or more of the respective fan blades 154. Thus, in exemplary embodiments, during a cruise operating mode of the aircraft 100 (FIG. 1), at least a portion of the forward portion 246 is supported or fixed in a cantilevered manner such that at least the medial portion 247 and the aft portion 248 of a particular cowl panel 222 is freestanding or unsupported and rotates about the longitudinal axis in a cantilevered state. In the illustrated embodiment, the cowl panel 222 is depicted as a continuous structure extending aft of the spinner assembly 153; however, it should be understood that the cowl panel 222 may include a plurality of segments or sub-panels, extending circumferentially and/or forward/aft, attached to each other to form the cowl panel 222.

In exemplary embodiments, the support 240 may extend any circumferential span to support the spinner assembly 153 and/or the cowl assembly 220. In exemplary embodiments, the cowl assembly 220 is cantileverly supported at a location forward of the fan blades 154. As best depicted in FIG. 2, the outboard end 244 of the support 240 is located at a defined axial plane 250 forward of the central blade axis 156 such that the cowl assembly 220 is cantileverly supported at an axial location forward of the fan blades 154. In the embodiment illustrated in FIGS. 2 and 3, the support 240 is located and/or extends forward of the fan blades 154 such that the cowl assembly 220 is cantileverly supported at an axial location forward of the fan blades 154. However, it should be understood that, additionally or alternatively, the cowl assemble 220 may be cantileverly supported at an axial location aligned with or aft of the fan blades 154. In other words, in exemplary embodiments, the rotor 230 may include an aft rotor arm (not illustrated) extending aft of the rotor main body 232, and a support (not illustrated) may be coupled to such an aft support arm that extends at least partially radially outward and at least partially aft to provide a mounting surface for at least a portion of the cowl assembly 220 aft of the fan blades 154.

Thus, embodiments of the present disclosure provide a cowl assembly that is cantileverly supported within the fan section to enable a slight deflection of the cowl assembly in the event of an object is ingested through the fan section in the fan section airflow. By forming the cowl assembly as a cantilevered structure in accordance with the present disclosure, an impact by an object entering the fan section is absorbed by the cantilevered cowl assembly instead of such impact being transferred to other components of the gas turbine engine. Additionally, because at least a portion of the cowl assembly is supported in a cantilevered manner, the omission of attachment structure at the freestanding or unsupported portions of the cowl assembly reduce the weight of the gas turbine engine.

Although specific features of various embodiments may be shown in some drawings and not in others, this is for convenience only. In accordance with the principles of the present disclosure, any feature of a drawing may be referenced and/or claimed in combination with any feature of any other drawing.

Further aspects of the disclosure are provided by the subject matter of the following clauses:
A gas turbine engine, comprising: a turbomachine having a compressor section, a combustion section, and a turbine section in serial flow order; a fan section defining an axial centerline and a rotor, the fan section comprising a fan and a spinner assembly drivingly coupled to the turbomachine, the rotor supporting a plurality of fan blades being rotatable about the axial centerline in a circumferential direction; and a cowl assembly positioned aft of at least a portion of the spinner assembly, the cowl assembly and the spinner assembly defining at least part of an airflow surface rotatable with the fan and exposed to a fan airflow provided to and through the fan during operation of the gas turbine engine, wherein the cowl assembly is at least partly cantileverly supported by the rotor.

The gas turbine engine of the previous clause, further comprising a support coupled to the rotor, and wherein the cowl assembly is cantileverly supported by the support.

The gas turbine engine of any previous clause, further comprising: a spinner shell defining at least in part the airflow surface; and a support having an inboard end and extending at least in part radially outward to an outboard end, wherein the inboard end is coupled to the rotor, and wherein the spinner shell is coupled to the outboard end and extends forward from the outboard end; and wherein the cowl assembly is cantileverly coupled to the outboard end.

The gas turbine engine of any previous clause, wherein the spinner shell comprises an aft end, and wherein the cowl assembly extends aft of the aft end of the spinner shell.

The gas turbine engine of any previous clause, wherein at least one fan blade of the plurality of fan blades defines a central blade axis, and wherein the cowl assembly is cantileverly supported along an axial plane located forward of the central blade axis.

The gas turbine engine of any previous clause, further comprising: a support having an inboard end and extending radially outward and axially forward to define an outboard end, and wherein the inboard end is coupled to the rotor; and wherein the cowl assembly is cantileverly coupled to the outboard end and extends aft from the outboard end.

The gas turbine engine of any previous clause, wherein the rotor comprises a rotor main body having a forward rotor arm, and further comprising: a support having an inboard end and extending at least in part radially outward to define an outboard end, and wherein the inboard end is coupled to the forward rotor arm; and wherein the cowl assembly is cantileverly coupled to the outboard end.

A gas turbine engine, comprising: a turbomachine having a compressor section, a combustion section, and a turbine section in serial flow order; a fan section defining an axial centerline and a rotor, the fan section comprising a fan drivingly coupled to the turbomachine, the rotor supporting a plurality of fan blades being rotatable about the axial centerline in a circumferential direction, and wherein at least one fan blade of the plurality of fan blades defines a central blade axis; and a cowl assembly defining at least part of an airflow surface rotatable with the fan and exposed to a fan airflow provided to and through the fan during operation of the gas turbine engine, and wherein the cowl assembly is cantileverly supported, at least in part by the rotor, along an axial plane located forward of the central blade axis.

The gas turbine engine of claim 8, further comprising: a support having an inboard end and extending at least in part radially outward to an outboard end, wherein the inboard end is coupled to the rotor; and wherein the cowl assembly is cantileverly supported in an aft direction from the outboard end.

The gas turbine engine of any previous clause, further comprising: a spinner shell defining at least in part the airflow surface; and a support having an inboard end and extending at least in part radially outward to an outboard end, wherein the inboard end is coupled to the rotor, and wherein the spinner shell is coupled to the outboard end and extends forward from the outboard end; and wherein the cowl assembly is cantileverly coupled to the outboard end.

The gas turbine engine of any previous clause, wherein the spinner shell comprises an aft end, and wherein the cowl assembly extends aft of the aft end of the spinner shell.

The gas turbine engine of any previous clause, further comprising: a support having an inboard end and extending radially outward and axially forward to define an outboard end, and wherein the inboard end is coupled to the rotor; and wherein the cowl assembly is cantileverly coupled to the outboard end and extends aft from the outboard end.

The gas turbine engine of any previous clause, wherein the rotor comprises a rotor main body having a forward rotor arm, and further comprising: a support having an inboard end and extending at least in part radially outward to define an outboard end, and wherein the inboard end is coupled to the forward rotor arm; and wherein the cowl assembly is cantileverly coupled to the outboard end.

The gas turbine engine of any previous clause, further comprising: a support having an inboard end and extending radially outward and axially forward to define an outboard end, and wherein at least a portion of the outboard end lies within the axial plane.

A gas turbine engine, comprising: a turbomachine having a compressor section, a combustion section, and a turbine section in serial flow order; a fan section defining an axial centerline and a rotor, the fan section comprising a fan drivingly coupled to the turbomachine, the rotor supporting a plurality of fan blades being rotatable about the axial centerline in a circumferential direction; a cowl assembly defining at least part of an airflow surface rotatable with the fan and exposed to a fan airflow provided to and through the fan during operation of the gas turbine engine; and a support coupled to the rotor and extending at least partially radially outward toward the cowl assembly and extending at least partially forward of the plurality of fan blades, and wherein the cowl assembly is cantileverly supported by the support.

The gas turbine engine of any previous clause, wherein the support comprises an inboard end and an outboard end distal to the inboard end, and wherein the inboard end is coupled to the rotor, and wherein the cowl assembly is cantileverly supported by the outboard end.

The gas turbine engine of any previous clause, wherein the rotor comprises a rotor main body having a forward rotor arm, and wherein the inboard end is coupled to the forward rotor arm.

The gas turbine engine of any previous clause, wherein the cowl assembly extends aft from the outboard end.

The gas turbine engine of any previous clause, further comprising: a spinner shell defining at least in part the airflow surface, and wherein the spinner shell is coupled to the outboard end and extends forward from the outboard end.

The gas turbine engine of any previous clause, wherein the spinner shell comprises an aft end, and wherein the cowl assembly extends aft of the aft end of the spinner shell.

A gas turbine engine, comprising: a turbomachine having a compressor section, a combustion section, and a turbine section in serial flow order; a fan section defining an axial centerline and a rotor, the fan section comprising a fan drivingly coupled to the turbomachine, the rotor supporting a plurality of fan blades being rotatable about the axial centerline in a circumferential direction; a cowl assembly defining at least part of an airflow surface rotatable with the fan and exposed to a fan airflow provided to and through the fan during operation of the gas turbine engine; and a support having at least a portion thereof positioned forward of the fan blades, and wherein the cowl assembly is cantileverly supported by the portion of the support.

An aircraft, comprising: a plurality of gas turbine engines, each gas turbine engine of the plurality of gas turbine engines comprising: a turbomachine having a compressor section, a combustion section, and a turbine section in serial flow order; a fan section defining an axial centerline and a rotor, the fan section comprising a fan drivingly coupled to the turbomachine, the rotor supporting a plurality of fan blades being rotatable about the axial centerline in a circumferential direction; a cowl assembly defining at least part of an airflow surface rotatable with the fan and exposed to a fan airflow provided to and through the fan during operation of the gas turbine engine; and a support having at least a portion thereof positioned forward of the fan blades, and wherein the cowl assembly is cantileverly supported by at least the portion of the support.

The aircraft of any preceding clause, wherein the cowl assembly rotates about the axial centerline while being cantileverly supported during at least a cruise operating mode of the aircraft.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

While this disclosure has been described as having exemplary designs, the present disclosure can be further modified within the scope of this disclosure. This application is therefore intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A gas turbine engine, comprising:
a turbomachine having a compressor section, a combustion section, and a turbine section in serial flow order;
a fan section defining an axial centerline and a rotor, the fan section comprising a fan and a spinner assembly drivingly coupled to the turbomachine, the rotor supports a plurality of fan blades being rotatable about the axial centerline in a circumferential direction; and
a cowl assembly positioned aft of at least a portion of the spinner assembly, the cowl assembly and the spinner assembly defining at least part of an airflow surface rotatable with the fan and exposed to a fan airflow provided to and through the fan during operation of the gas turbine engine, wherein the cowl assembly is at least partly cantileverly supported by the rotor.

2. The gas turbine engine of claim 1, further comprising a support coupled to the rotor, and wherein the cowl assembly is cantileverly supported by the support.

3. The gas turbine engine of any preceding claim, further comprising:
a spinner shell defining at least in part the airflow surface; and
a support having an inboard end and extending at least in part radially outward to an outboard end, wherein the inboard end is coupled to the rotor, and wherein the spinner shell is coupled to the outboard end and extends forward from the outboard end; and
wherein the cowl assembly is cantileverly coupled to the outboard end.

4. The gas turbine engine of claim 3, wherein the spinner shell comprises an aft end, and wherein the cowl assembly extends aft of the aft end of the spinner shell.

5. The gas turbine engine of any preceding claim, wherein at least one fan blade of the plurality of fan blades defines a central blade axis, and wherein the cowl assembly is cantileverly supported along an axial plane located forward of the central blade axis.

6. The gas turbine engine of any preceding claim, further comprising:
a support having an inboard end and extending radially outward and axially forward to define an outboard end, and wherein the inboard end is coupled to the rotor; and
wherein the cowl assembly is cantileverly coupled to the outboard end and extends aft from the outboard end.

7. The gas turbine engine of any preceding claim, wherein the rotor comprises a rotor main body having a forward rotor arm, and further comprising:
a support having an inboard end and extending at least in part radially outward to define an outboard end, and wherein the inboard end is coupled to the forward rotor arm; and
wherein the cowl assembly is cantileverly coupled to the outboard end.

8. A gas turbine engine, comprising:
a turbomachine having a compressor section, a combustion section, and a turbine section in serial flow order;
a fan section defining an axial centerline and a rotor, the fan section comprising a fan drivingly coupled to the turbomachine, the rotor supporting a plurality of fan blades being rotatable about the axial centerline in a circumferential direction, and wherein at least one fan blade of the plurality of fan blades defines a central blade axis; and
a cowl assembly defining at least part of an airflow surface rotatable with the fan and exposed to a fan airflow provided to and through the fan during operation of the gas turbine engine, and wherein the cowl assembly is cantileverly supported, at least in part by the rotor, along an axial plane located forward of the central blade axis.

9. The gas turbine engine of claim 8, further comprising:
a support having an inboard end and extending at least in part radially outward to an outboard end, wherein the inboard end is coupled to the rotor; and
wherein the cowl assembly is cantileverly supported in an aft direction from the outboard end.

10. The gas turbine engine of any of claims 8 to 9, further comprising:
a spinner shell defining at least in part the airflow surface; and
a support having an inboard end and extending at least in part radially outward to an outboard end, wherein the inboard end is coupled to the rotor, and wherein the spinner shell is coupled to the outboard end and extends forward from the outboard end; and
wherein the cowl assembly is cantileverly coupled to the outboard end.

11. The gas turbine engine of claim 10, wherein the spinner shell comprises an aft end, and wherein the cowl assembly extends aft of the aft end of the spinner shell.

12. The gas turbine engine of any of claims 8 to 11, further comprising:
a support having an inboard end and extending radially outward and axially forward to define an outboard end, and wherein the inboard end is coupled to the rotor; and
wherein the cowl assembly is cantileverly coupled to the outboard end and extends aft from the outboard end.

13. The gas turbine engine of any of claims 8 to 12, wherein the rotor comprises a rotor main body having a forward rotor arm, and further comprising:
a support having an inboard end and extending at least in part radially outward to define an outboard end, and wherein the inboard end is coupled to the forward rotor arm; and
wherein the cowl assembly is cantileverly coupled to the outboard end.

14. The gas turbine engine of any of claims 8 to 13, further comprising:
a support having an inboard end and extending radially outward and axially forward to define an outboard end, and wherein at least a portion of the outboard end lies within the axial plane.

15. A gas turbine engine, comprising:
a turbomachine having a compressor section, a combustion section, and a turbine section in serial flow order;
a fan section defining an axial centerline and a rotor, the fan section comprising a fan drivingly coupled to the turbomachine, the rotor supporting a plurality of fan blades being rotatable about the axial centerline in a circumferential direction;
a cowl assembly defining at least part of an airflow surface rotatable with the fan and exposed to a fan airflow provided to and through the fan during operation of the gas turbine engine; and
a support coupled to the rotor and extending at least partially radially outward toward the cowl assembly and extending at least partially forward of the plurality of fan blades, and wherein the cowl assembly is cantileverly supported by the support.
